# EUROPEAN PATENT APPLICATION

(11) **EP 4 523 817 A1**
(43) Date of publication of application: **19.03.2025**
(21) Application number: 23306522.6
(22) Date of filing: 14.09.2023
(51) Int. Cl.: B22F 10/28, B22F 10/362, B22F 10/364, B22F 12/45, B33Y 10/00, B33Y 40/10, B22F 10/368, B22F 10/50, B22F 12/70, B33Y 50/02, B22F 12/13, B22F 12/90

(54) **POWDER BED FUSION APPARATUS AND METHODS**

(71) Applicant: Renishaw PLC, Wotton-under-Edge, Gloucestershire GL12 8JR (GB)
(72) Inventor: BROWN, Ceri, 77447 Marne la Vallée Cedex 2 (FR)
(74) Representative: Germain Maureau

(57) **Abstract**

A powder bed fusion method comprising forming a plurality of powder layers of a powder bed using a recoater, irradiating a powder layer of the plurality of powder layers with a first energy beam to melt powder when the recoater is moving across the powder bed to form the powder layer. The method further comprises inputting heat into powder and/or solidified material in front of the recoater using an energy source above the powder bed, as the recoater is moved over the powder bed to form the powder layer, in advance of the powder being melted and/or the solidified material being remelted by the irradiation of the powder layer with the first energy beam.

## Description

### Field of Invention

This invention concerns a powder bed fusion apparatus and methods. The invention has particular application to powder bed fusion apparatus and methods, wherein an energy beam is scanned across a powder bed simultaneously with forming a powder layer, in particular a metal powder layer, with a recoater.

### Background

A powder bed fusion apparatus produces objects through layer-by-layer consolidation (by melting or sintering) of a powder material, such as a metal powder material, using a high energy beam, such as a laser beam. A powder layer is formed across a powder bed in a build chamber by depositing a heap of powder adjacent to the powder bed and spreading the heap of powder with a wiper across (from one side to another side of) the powder bed to form the layer. A laser beam is then scanned across portions of the powder layer that correspond to a cross-section of the object being constructed. The laser beam irradiates the powder at selected locations to melt or sinter the powder to form consolidated material. After selective consolidation of a layer, the powder bed is lowered and a further layer of powder is spread over the surface and consolidated, as required.

It is known to heat the powder bed and/or object being formed. For example, the powder bed and/or part may be heated by a heater embedded within a build platform that supports the powder bed and object. An example of such apparatus is disclosed in US2004/0056022 A1, which can heat up to an operating temperature of between 300°C and 500°C . A problem with such an arrangement is that the entire build volume is heated and at the end of the build a user must wait for the powder bed and build to cool before debuilding and removing the component from the apparatus. Furthermore, the effectiveness of the heater in the build platform reduces as the height of the build increases. In particular, for tall builds, a significant temperature difference will be present between the bottom and top of the part. Finally, the apparatus, such as the seals around the build platform, must be able to withstand the high temperatures of the build volume.

It is also known to preheat the powder in front of the laser beam used for melting or sintering the powder. Examples, of such a method are disclosed in US5393482, US2013/0064706 A1, WO2013/092994 A1 and US2015/028361 A1. Typically, such preheating involves sintering the powder (possibly quite heavy sintering) with the preheating process. However, it may be difficult to get sufficient energy into the material because the preheating process has to move at the same speed as the melting laser beam. Most powder bed fusion processes operate in a transition mode between conduction mode welding and keyhole welding. For a leading preheating scan to be beneficial, it is likely that the preheating scan will have to be on the edge of a conduction mode process. Any heat that is input by the leading laser beam is likely to rapidly dissipate because the underlying powder and/or solidified material is likely to be at a much lower temperature. Accordingly, delays between the leading laser beam that preheats the powder and the laser beam that melts the powder should be minimised. Thus, these techniques require movement of the laser beams to be synchronised to follow each other closely.

WO2015/140547 A1 discloses apparatus wherein the scanner scans the energy beam across the powder bed to consolidate powder material either side of the wiper when the wiper is moving across the powder bed. The scanner may be controlled to scan the energy beam across at least one of the powder layers during two or more strokes of the wiper across the powder bed, such as a stroke in which the wiper forms the powder layer and one or more subsequent strokes. WO2022/233653 discloses apparatus which irradiates a layer of raw material powder while the layer depositing mechanism moves.

### Summary of Invention

According to a first aspect of the invention there is provided a powder bed fusion method comprising forming a plurality of powder layers of a powder bed using a recoater and irradiating a powder layer of the plurality of powder layers with a first energy beam to melt powder when the recoater is moving across the powder bed to form the powder layer.

The method may comprise inputting heat into powder and/or solidified material in front of the recoater using an energy source above the powder bed, as the recoater is moved over the powder bed to form the powder layer. The input of heat into the powder and/or the solidified material may be in advance of the powder being melted and/or the solidified material being remelted by the irradiation of the powder layer (formed by the movement of the recoater) with the first energy beam (which melts powder of the powder layer and is carried out behind the recoater). The input of heat into the powder and/or the solidified material may raise or maintain a temperature of the powder and/or the solidified material below a melting temperature. The input of heat into the powder may be sufficient to sinter, but not melt, the powder. The input of heat into the powder may raise or maintain a temperature of the powder below a sintering temperature, i.e. the input of heat is insufficient to sinter the powder.

When a part being manufactured has minimal supports (as is desirable) and is surrounded by powder (which is a thermal insulator), the heat loss from the part is mainly through a top surface of the part. Inputting heat from an energy source above the powder bed, such as by preheating a top surface of the part or powder that covers the top surface, reduces the heat loss, ensuring that the part is maintained at or elevated to a desired temperature. This may ensure that a more homogeneous temperature is achieved throughout the part compared to apparatus having a heater embedded within a build platform. In previous machines, to heat a part and powder bed from above, there is a pause in the heating of the part and powder bed whilst the next powder layer is formed by a recoater. During this time, the heated part and/or powder bed can cool. Inputting heat into the powder and/or the solidified material in front of the recoater, as the recoater is moved over the powder bed to form the powder layer, reduces the delay, and therefore an amount of cooling between the input of heat and the melting.

Furthermore, the method permits preheating where energy input is spread over a larger area and/or is input more slowly compared to using a leading laser beam. In particular, a speed at which an energy source is moved over the powder and/or solidified material need only be as fast as a speed of the recoater. Accordingly, an energy source having a lower energy density but longer dwell time can be used to gradually preheat the powder and/or the solidified material to the required temperature.

The inputting of heat may be carried out local to an area to be melted in the next powder layer, rather than heating the whole powder bed. The energy source may be the first or a second energy beam directed over the powder and/or the solidified material in front of the recoater to input heat into the powder and/or the solidified material. The method may comprise scanning the first or the second energy beam over the powder and/or the solidified material in front of the recoater to input heat into the powder and/or the solidified material. In other words, the powder and/or the solidified material may be irradiated by (exposed to radiation of) the first or the second energy beam to input heat into the powder and/or the solidified material. The method may comprise steering the first or the second energy beam to input heat to selected regions of the powder and/or the solidified material in front of the recoater.

The method may comprise forming molten material by melting powder with the first or the second energy beam and allowing the molten material to solidify to form the solidified material and inputting heat into the solidified material by irradiating the solidified material with the second energy beam when in front of the recoater when forming the powder layer without melting the solidified material.

The method may comprise inputting heat into the powder and/or the solidified material in front of the recoater using the second energy beam, as the recoater is moved over the powder bed to form the powder layer, in advance of the powder being melted and/or the solidified material being remelted by irradiating with the first energy beam the powder layer formed behind the recoater. The first energy beam may be directed by a first scanner and the second energy beam directed by a second scanner. The method may comprise, as the recoater is moved over the powder bed to form the powder layer, inputting heat into the powder and/or the solidified material in front of the recoater using the second energy beam and, at the same time, melting powder of the powder layer with the first energy beam.

The first and/or second energy beam may be used for the inputting of heat into the powder and/or the solidified material in front of the recoater and for melting powder and/or remelting the solidified material by irradiating the powder layer formed behind the recoater. The method may comprise changing a focus of the energy beam between the inputting of heat into the powder and/or the solidified material in front of the recoater and the melting of the powder and/or remelting of the solidified material by irradiating the powder layer formed behind the recoater. The change in focus may comprise reducing a spot size between the inputting of heat into the powder and/or the solidified material in front of the recoater and the melting of powder and/or remelting of the solidified material by irradiating the powder layer formed behind the recoater.

The energy beam(s) may be laser beam(s).

Alternatively, the energy source may be a heater mounted on the recoater. For example, the heater may be a radiant heater or a radio frequency heater.

It will be understood that the term "in front of the recoater" means an area yet to be traversed by the recoater when forming the powder layer and the term "behind the recoater" means an area already traversed by the recoater when forming the powder layer.

The method may comprise carrying out the method described above for two or more powder layers. For a first powder layer of the plurality of powder layers, heat may be input into powder and/or solidified material on one side of the recoater when moving the recoater across the powder bed to form the first powder layer and, for a second powder layer of the plurality of powder layers, heat may be input into powder and/or solidified material on another side of the recoater when moving the recoater across the powder bed to form the second powder layer. For each of the first and second powder layers, the input of heat into the powder and/or the solidified material may be in advance of the powder being melted and/or the solidified material being remelted by the irradiation of the first/second powder layer to melt selected areas of the first/second powder layer. This input of heat into the powder and/or the solidified material may raise or maintain a temperature of the powder and/or the solidified material below a melting temperature. For example, the recoater may be a bidirectional recoater that spreads powder when moving in opposed directions.

Heat may be input into the powder and/or the solidified material for a one of the powder layers on two or more strokes of the recoater. For the one of the powder layers, heat may be input into the powder and/or the solidified material behind the recoater on a forming stroke of the powder layer and in front of the recoater on a subsequent stroke of the recoater. The subsequent stroke may be a stroke in which the next powder layer is formed. For a recoater that forms powder layers in only one direction (a "unidirectional recoater"), heat may be input into the powder and/or the solidified material, either in front of or behind the recoater, on strokes that do not form a powder layer, such as a return stroke.

According to a second aspect of the invention there is provided a powder bed fusion apparatus comprising a controller, the controller arranged to control the powder bed fusion apparatus to carry out the method of the first aspect of the invention.

According to a third aspect of the invention there is provided a controller for a powder bed fusion apparatus the controller arranged to control the powder bed fusion apparatus to carry out the method of the first aspect of the invention.

According to a fourth aspect of the invention there is provided a data carrier having instructions stored thereon, which, when executed by a controller of a powder bed fusion apparatus, causes the controller to control the powder bed fusion apparatus to carry out the method of the first aspect of the invention.

According to a fifth aspect of the invention there is provided a method of generating instructions for powder bed fusion comprising determining a first energy beam scanning sequence for a first energy beam to melt powder when a recoater is moving across the powder bed to form a powder layer, determining a second energy beam scanning sequence for a second energy beam to input heat into powder and/or solidified material in front of the recoater, as the recoater is moved over the powder bed to form the powder layer, in advance of the powder being melted and/or the solidified material being remelted by irradiating with the first energy beam the powder layer formed behind the recoater and generating instructions, such as in the form of a build file, for a powder bed fusion apparatus to carry out the first energy beam scanning sequence and the second energy beam scanning sequence.

The method may comprise outputting the instructions to a powder bed fusion apparatus.

According to a sixth aspect of the invention there is provided a data carrier having instructions stored thereon, which, when executed by a processor cause the processor to carry out the method of the fifth aspect of the invention.

According to a seventh aspect of the invention there is provided a powder bed fusion method comprising forming an object layer-by-layer by, repeatedly, forming a layer or metal powder using a recoater and irradiating the layer with an energy beam to melt powder to form solidified material, the method further comprising measuring a temperature of metal powder located around or on top of the solidified material and inputting heat into the solidified material and/or selecting parameters for the energy beam when solidifying material based on the temperature measurement of the metal powder.

In order to avoid undesirable outcomes in a powder bed fusion method, the powder should be solidified under particular temperature conditions (such as within a window of temperatures at which the parameters of the energy beam produce a desired result), for example to avoid underheating and/or overheating. Such particular temperature conditions may be achieved by inputting an appropriate amount of heat into the solidified material (for example, by using the method described with reference to the first aspect of the invention) and/or selecting appropriate parameters for the energy beam used to melt powder. To determine an appropriate amount of heat and/or to select appropriate parameters it may be desirable to determine a temperature of the solidified material before inputting the heat or melting powder. However, directly measuring the temperature of solidified metal material, such as with a thermal camera, is difficult because the metal is a good reflector of radiation and can reflect radiation emitted from other surfaces in the powder bed fusion apparatus. This reflection of radiation emitted by other surfaces can result in inaccurate direct temperature measurements of the solidified material. However, the metal powder is a diffuse reflector and therefore measurements of the temperature of the powder, for example with a thermal camera, may be more accurate. Heat will conduct from the solidified material into the powder surrounding and/or spread on top of the solidified material such that, given enough time (such as milliseconds or seconds), a temperature of the powder will correspond to (be close to or equal to) a temperature of solidified material local to the powder. Accordingly, one can infer a temperature of the solidified material by measuring a temperature of the powder and, from this inference, select when and/or how much energy to input into the build going forward to produce a desired outcome.

Heat may be input such that the solidified material is within a predefined temperature range. For example, heat may be input such that a surface temperature of the part during the build is homogenous (i.e. all of the surface is within a predefined temperature range). For example, heat may be input into the solidified material as described above with reference to the first aspect of the invention, via a radiant heater, via an energy beam, and/or via radio frequency heating, for example high frequency radio frequency heating as described in WO2020/240180, which is incorporated herein in its entirety by reference. The input of heat may not melt the solidified material.

The method may comprise (directly) measuring a plurality of temperatures of the solidified material at different times, determining a rate of change of temperature with time from the plurality of temperatures and inputting heat into the solidified material and/or selecting parameters for the energy beam when solidifying material based on the temperature measurement of the powder and the rate of change of temperature. Even though a direct measure of a temperature of the solidified material may not give an accurate measurement of temperature of the solidified material, it may accurately measure a rate at which the temperature of the solidified material changes. This additional information in conjunction with a temperature measurement of powder local to the solidified material may be used to predict an actual temperature of the solidified material. In particular, a rate of cooling of the solidified material is related to a difference in temperature between the solidified material and surrounding material. If a temperature of the surrounding material is known, for example from measuring a temperature of the powder, and a rate of change of temperature of the solidified material is known, then a temperature of the solidified material can be predicted.

A thermal model may be used to determine a predicted temperature of solidified material based on the temperature measurement of the powder. For example, the thermal model may be "tuned" based on the temperature measurement., The method may comprise inputting heat into the solidified material (without remelting) based on the predicted temperature. Heat may be input into the solidified material to maintain the solidified material within a temperature window for which the energy beam parameters are deemed to produce an acceptable result. If the model predicts that the temperature of the solidified material falls outside of the temperature window, then heat may be input into the solidified material to bring a temperature of the solidified material within the temperature window. The thermal model may be able to predict temperatures of the solidified material to a higher resolution (spatially and/or temporally) than from the direct temperature measurements of a thermal camera, such as an infra-red camera.

A solidification model may be used to determine the parameters for the energy beam. The solidification model may use determined temperatures of the solidified material, such as temperatures local to an irradiation of the energy beam that solidifies, for example melts, powder, as an input to the thermal solidification model. The thermal solidification model may use a temperature of solidified material determined by the thermal cooling model as the input. The thermal solidification model may be a heat conduction-only model. The thermal solidification model may use an equivalent volumetric heat source to model the melt pool. The thermal solidification model may be as described in International patent application No. PCT/EP2023/060362, which is incorporated herein in its entirety by reference. An input to the model may be an initial temperature of the powder when exposed to the energy beam. The initial temperature may be determined from measuring the temperature of the powder and/or the thermal cooling model. The thermal solidification model may determine the parameters for the energy beam that, given the initial temperature, result in a melt pool having preset dimensions.

The method may comprise capturing a thermal image of the powder and solidified material and processing the image to identify temperature values corresponding to powder. *How would powder be identified?*

When used in conjunction with the first aspect of the invention, the method may comprise measuring a temperature of the powder of the powder layer in front of the recoater and/or the powder of the powder layer being formed by the recoater (powder located behind the recoater). The method may comprise measuring the temperature of powder of a powder layer formed behind the recoater before the powder is melted by being irradiated by the first energy beam.

According to an eighth aspect of the invention there is provided a powder bed fusion apparatus comprising a measurement device for measuring a temperature of powder and a controller, the controller arranged to control the powder bed fusion apparatus to carry out the method of the seventh aspect of the invention.

The measurement device may be a thermal camera, such as an infra-red camera.

According to a ninth aspect of the invention there is provided a controller for a powder bed fusion apparatus the controller arranged to control the powder bed fusion apparatus to carry out the method of the seventh aspect of the invention.

According to a tenth aspect of the invention there is provided a data carrier having instructions stored thereon, which, when executed by a controller of a powder bed fusion apparatus, causes the controller to control the powder bed fusion apparatus to carry out the method of the seventh aspect of the invention.

According to an eleventh aspect of the invention there is provided a method of generating instructions for powder bed fusion comprising receiving temperature measurements of metal powder located around or on top of the solidified material in a powder bed fusion process, determining instructions of the powder bed fusion process for inputting heat into the solidified material and/or for an energy beam when solidifying material in the powder bed fusion process based on the temperature measurements and outputting the instructions to powder bed fusion apparatus.

According to a twelfth aspect of the invention there is provided a data carrier having instructions stored thereon, which, when executed by a processor cause the processor to carry out the method of the eleventh aspect of the invention.

The data carrier may be a suitable medium for providing a machine with instructions such as a non-transient data carrier, for example a floppy disk, a CD ROM, a DVD ROM / RAM (including - R/-RW and +R/ + RW), an HD DVD, a Blu Ray(TM) disc, a memory (such as a Memory Stick(TM), an SD card, a compact flash card, or the like), a disc drive (such as a hard disc drive), a tape, any magneto/optical storage, or a transient data carrier, such as a signal on a wire or fibre optic or a wireless signal, for example a signal sent over a wired or wireless network (such as an Internet download, an FTP transfer, or the like).

### Description of Drawings

**FIGURE 1** is a powder bed fusion apparatus according to an embodiment of the invention;
**FIGURE 2** is a plan view of the powder bed fusion apparatus showing the plurality of scanners;
**FIGURE 3** is a schematic illustrating a powder bed fusion method according to an embodiment of the invention.

### Description of Embodiments

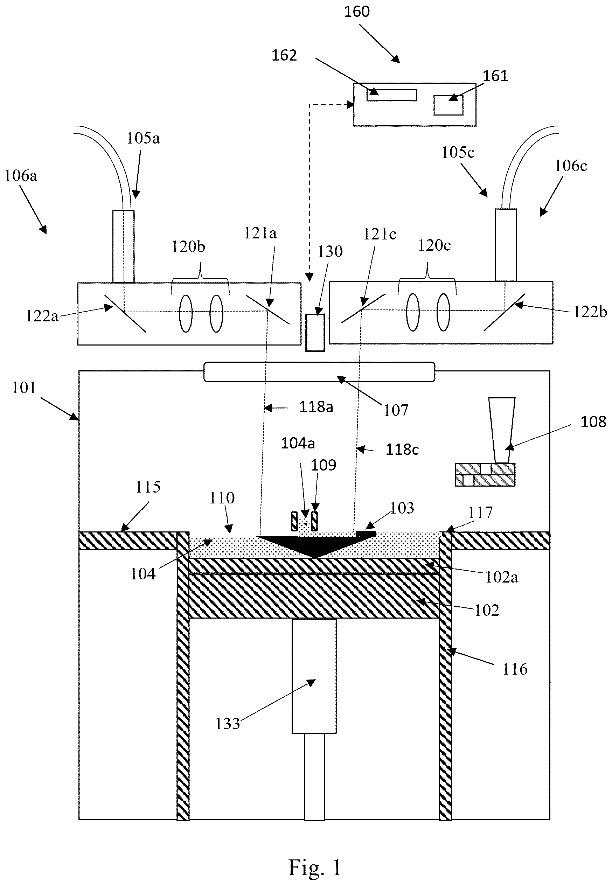

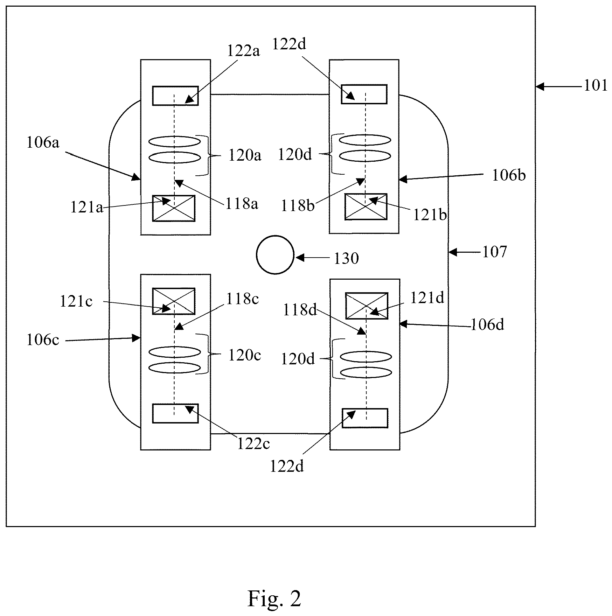

Referring to Figures 1 and 2, a powder bed fusion apparatus according to an embodiment of the invention comprises a build chamber 101 having therein a processing plate 115 defining an aperture and a build sleeve 116 extending down from the aperture. A build platform 102 is lowerable in the build sleeve 116 such that build sleeve 116 and build platform 102 together define a build volume 117. The build platform 102 supports a build substrate plate 102a, a powder bed 104 and workpiece (object) 103 as the workpiece is built by selective laser melting of the powder. The platform 102 is lowered within the build volume 117 under the control of a drive mechanism (not shown) as successive layers 103a, 103b of the workpiece 103 are formed.

Layers of powder 104 are formed as the workpiece 103 is built by dispensing apparatus 108 and a recoater 109. The recoater 109 comprises a pair of spaced apart wiper blades, each wiper blade for spreading powder across the powder bed 104 in a different, opposite direction. This recoater 109 may be called a bidirectional recoater as it spreads powder layers through movement in the opposed directions. The dispensing apparatus 108 dispenses powder 104a into the gap between the spaced apart wiper blades when the recoater 109 is located below the powder dispenser 108. Mechanisms for achieving such timely dispense are disclosed in US6672343 B1. Movement of the recoater 109 spreads the dispensed powder into powder layers of the powder bed. A position of a lower edge of each blade of the recoater 109 defines a working plane 110 at which powder is melted.

A plurality of laser modules generate laser beams 118a, 118b, 118c, 118d for melting the powder 104. Each laser module comprises a fibre optic 128a, 128b, 128c, 128d and beam delivery optic (BDO) 105a, 105b, 105c and 105d for delivering the laser beam 118a, 118b, 118c, 118d to the corresponding optical scanner 106a, 106b, 106c, 106d. The optical scanner 106a, 106b, 106c, 106d steers the laser beams 118a, 118b, 118c, 188d on to selected areas of the powder bed 104 in order to build the object. The laser beams 118a, 118b, 118c, 118d enter through a common laser window 107.

Each optical scanner 106a, 106b, 106c, 106d comprises movable steering optics 121, such as two mirrors mounted on galvanometers, for steering the laser beam 118 in perpendicular directions, X and Y, across working plane 110 and focussing optics 120, such as two movable lenses for changing the focus of the laser beam 118. The optical scanner is controlled such that the focal position of the laser beam 118 remains in the same plane 110 as the laser beam 118 is moved across the working plane 110. In this embodiment, each scanner can steer the corresponding laser beam 118 across a working field which covers the whole of the powder bed 104.

A thermal camera 130 is mounted to view the powder bed 104 through the window 107 and is configured to capture images of the powder bed 104. In this embodiment, the camera is arranged such that each image includes the entire working plane 110 of the powder bed 104. However, in another embodiment, a field of view of the camera may be arranged to move across the powder bed such that each image captured by the camera only covers a partial region of the powder bed 104. The field of view may be moved across the powder bed by steering optics, for example the thermal camera may be mounted on axis with a laser beam 118a, 118b, 118c, 118d to view the powder bed via one of the pairs 121a, 121b, 121c, 121d of steering optics for steering the laser beam or may be mounted to move together with the recoater 109.

The powder bed fusion apparatus comprises a controller 160 for receiving images from camera 130 and controlling modules of the apparatus, including the lasers, the scanners 106a, 106b, 106c, 106d and movement of the recoater 109. The controller comprises a processor 161 and memory 162 that has stored thereon a computer programme, which, when executed by the processor causes the powder bed fusion apparatus to be controlled in the manner described below. The software may comprise instructions generated by build preparation software. The build preparation software may be located on the apparatus or remote from the apparatus, such as on a general-purpose computer. The build preparation software generates instructions, such as scan paths, scanning parameters and/or scanning sequences, based on geometry of the object 103 to be built and these instructions are sent to the controller for execution. The scanning parameters may be laser power, scanning speed (or point distance and exposure time), spot size, and/or other parameters that affect a melt pool shape. A layer thickness is conventionally the same for all powder layers and set by a user. However, for some of the embodiments described below, the powder layer thickness is also a variable to be selected based on a geometry of the object 103 to be built.

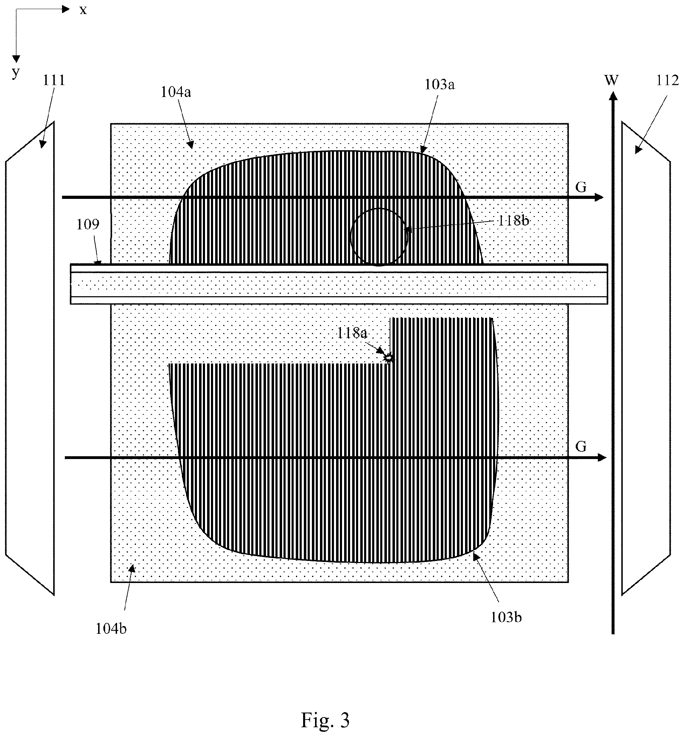

Referring to Figure 3, the powder bed fusion apparatus further comprises a gas nozzle 111 for delivering gas into the build chamber 101 and a gas exhaust 112 for extracting gas from the build chamber 101 in order to create a gas flow from one side to an opposite side of the powder bed 104 in a gas flow direction G.

In operation, the recoater 109 moves across the bed in a direction W to form a powder layer 104b over the previously formed powder layer 104a. The previously formed powder layer 104a has already been irradiated to form solidified material 103a of the object 103. As the recoater 109 moves across the powder bed 104, laser beam 118a is steered across the powder layer 104b to melt powder to form solidified area/slice 103b. The irradiation of the powder layer 104b will melt material (powder and/or solidified material) of the previous layer 104a. This is required in order that powder to be solidified in powder layer 104b is joined to material solidified in layer 104a. At the same time as melting powder in powder layer 104b, a laser beam 118b irradiates solidified material of the previous powder layer to input heat into the solidified material 103a and/or powder 104a in front of the recoater 109, as the recoater 109 is moved over the powder bed 104 to form powder layer 104b. A scanner 106a, 106b, 106c, 106d that directs the laser beam 118a may set the focussing optics 120 such that a focal point of the laser beam 118a is above or below the working plane 110. In this way, a laser beam spot size on a surface of the powder bed is large compared to a spot size created if the focal point of the laser beam is located at the working plane 110. The spot size of the laser beam 118a is typically larger, such as 2 to more times larger, than the spot size of laser beam 118b used to melt the powder. The 1/e spot diameter for laser beam 118a may be 100µm or less whereas 1/e spot diameter for laser beam 118b may be the 200µm or more, such as 500 µm or more or even 1mm or more. In addition to changing the laser beam focus, the laser power may be reduced. By using such a large spot size, the laser power is spread over a larger area and is insufficient to melt the powder. In alternative embodiment, the spot size of laser beam 118b at the powder bed surface may be the same as laser beam 118a but the laser beam 118a may have a lower power. In a further embodiment, the focal position of the focal point of the laser beam 118b is the same as laser beam 118a, but a diameter of the focal point for laser beam 118b is greater than for laser beam 118a. In this way, the laser beam 118b inputs heat into the powder and solidified material in the layer below the powder layer 104b being formed in advance of the powder being melted and/or the solidified material being remelted by the irradiation of powder layer 104b by laser beam 118a.

Laser beam 118a may be scanned quickly over the powder layer 104b to melt material, whereas laser beam 118b may be scanned relatively slowly over the powder and/or solidified material of layer 104a to gradually input heat into the powder and/or the solidified material. The laser beam 118 may be moved in the recoater direction W when inputting heat into the powder and/or the solidified material at substantially the same speed as the recoater 109. The laser beam 118a for melting powder may move faster than the recoater 109 in the recoater direction W.

The input of heat in front of the recoater 109 and the melting behind the recoater 109 may be carried out for a plurality of powder layers.

A laser beam 118c, 118d may also be scanned across the solidified material 103b behind the recoater 109.

Furthermore, in a powder bed fusion apparatus comprising more than two scanners, such as that described above, one or more of the laser beams 118a, 118b, 118c, 118d may be used for inputting heat into the powder and/or solidified material in front of the recoater 109 and one or more of the laser beams 118a, 118b, 118c, 118d may be used for melting powder behind the recoater 109. More laser beams 118a, 118b, 118c, 118d may be used for melting material behind the recoater 109 than for inputting heat into the powder and/or solidified material in front of the recoater 109.

The input of heat may help to reduce the physical forces present when melting the powder because an amount of energy required to raise the powder above a melting temperature may be reduced. This may help to reduce spatter and an amount of condensate (by reducing an amount of vapourised material). Furthermore, the input of heat may provide a thermal environment local to molten material such that a desired cooling rate of the molten material is achieved. An eventual microstructure of the solidified material is dependent on a cooling rate of the molten material. Accordingly, by achieving a desired cooling rate, a desired microstructure may be achieved. For certain materials, rapid solidification of the material can result in solidification cracking. By inputting heat into the powder and/or solidified material in the layer below, a cooling rate may be kept below a rate at which solidification cracking occurs.

This input of heat may help to maintain a more homogeneous object temperature (and therefore, reducing distortion due to local temperature differences). When an object has minimal supports and is surrounded by powder (which is an insulator) the heat loss from the object is nearly all through the top surface. This heat loss can be mitigated by putting energy into the part through the same surface. With few or minimal connections (supports) to a build substrate, heat will poorly conduct away from the bottom of the object such that the bottom of the object will be closer to or at the same temperature as the top of the part. Furthermore, heat loss between inputting the heat through irradiating with laser beam 118b and melting powder with laser beam 118a is governed, at least in part, by the time between the input of heat and the melting of the powder. By inputting the heat and melting during moving the of the recoater 109 across the powder bed, the delay is reduced compared to inputting the heat prior to moving the recoater to form the next powder layer. Furthermore, the delay is well known and consistent because the delay is dependent on movement of the recoater 109, e.g. is based on how long it takes for the recoater 109 to pass a region of the powder bed, allowing an amount of cooling that takes place, and therefore the thermal environment at the time of melting, to be more accurately predicted.

With sufficiently powerful or sufficiently numerous laser beams it is possible to hold the whole object at a temperature close to but below the melting point of the material. With such high temperatures a cooling rate of the molten material will be significantly reduced as there will be a gentle temperature gradient between the molten material and the solidified material. Close to a melting point may be within 100°C of the melting point of the metal or ceramic powder.

In one embodiment, the controller 160 controls the laser beams to input energy into the solidified material based on the temperature measurements made by the thermal camera 130. The camara 130 is configured to measure temperatures of the powder bed, preferably at a plurality of times during formation of a powder layer. The images are processed to identify temperatures of the powder surrounding and spread over the solidified material and temperatures of the solidified material. For example, temperatures may be identified for regions of powder and solidified material 103a, 103b for both powder layer 104a that is being covered and powder layer 104b that is being formed. A plurality of images is obtained as the recoater 109 moves across the powder bed 104 such that a plurality of temperatures can be determined for each region.

From the measured temperatures of the powder, the controller 160 infers a temperature of the solidified material. This may be beneficial because the thermal camera 130 may not accurately measure the temperature of the solidified material 103a, 103b. The temperature of the solidified material may be inferred using a thermal model that relates temperatures measured at the periphery of the part to predicted temperatures of other regions of the solidified material. The thermal model may be based on the principles disclosed in ... In one embodiment, a rate of change of temperature of the solidified material 103a, 103b as determined from the measured temperatures is an input to the thermal model.

Based on the predicated temperatures, the controller 160 controls the scanner(s) 106a, 106b, 106c, 106d and/or lasers to input an amount of energy into the solidified material to increase or maintain a temperature of the solidified material within a preset temperature range/within an acceptable range of a target temperature. In this embodiment, the controller 160 controls the energy input into the solidified material by modifying the laser power as a laser beam 118a, 118b, 118c, 118d is scanned over the solidified material.

Powder is then spread over the solidified material when forming the next powder layer 104b. The images obtained by the thermal camera may include powder of powder layer 104b before it is melted by laser beam 118b. From these images, a temperature of this powder can be determined, and a temperature of the solidified material underneath inferred. This temperature measurement can be used to check that the preheating of the solidified material in front of the recoater 109 is heating the solidified material as required. If the measured temperature is outside of a required temperature range, then the parameters of the laser beam used to melt the powder may be modified such that desired melt pool conditions, such as a desired melt pool shape, is still achieved. For example, the thermal solidification model as described in International patent application No. PCT/EP2023/060362 may be used to determine parameters that result in the desired melt pool shape for a given temperature of the solidified material. Alternatively or additionally, the scanning of the solidified material of powder layer 104b may be modified from a planned irradiation plan, for example by changing a power of the laser beam 118a, based on the temperature measurements to bring the temperature of the part back to within the acceptable range.

Heat may also be input into the solidified material by a laser beam after it has been melted and allowed to solidify and before the next powder layer is formed by the recoater. Again, this input of heat may be based on the temperature measurements of the powder before it was melted.

The metal powder may be (primarily) a refractory metal, including niobium, molybdenum, tantalum, tungsten, rhenium, titanium, vanadium, chromium, zirconium, hafnium, ruthenium, rhodium, osmium and iridium and alloys of these materials, wherein these materials are the major component; silicon carbide; Ti6Al4V; nickel super-alloys, such as Hastelloy X, Inconel 718, Waspaloy, Nimonic 80A, Haynes 230 and CM247; and ceramics. These materials may benefit from maintaining or heating the object and/or powder bed to high temperatures, such as above 800°C, above 1000°C or above 1200°C.

In one embodiment, the energy beam used to input heat into the powder and/or solidified material in front of the recoater 109 may be a laser beam of a type different to the laser beam used to melt powder or may be an energy beam that can be steered over the powder bed that is not a laser beam. For example, the energy beam may be an electron beam.

In a further embodiment, a heater, such as a radiant heater may be mounted on the recoater to heat powder and/or solidified material in front of the recoater as the recoater moves over the powder bed. An energy beam, such as a laser beam, melts powder behind the recoater as the recoater moves across the powder bed.

In conjunction with inputting heat into the powder and/or solidified material in front of the recoater before the powder, formed thereon, is melted, the laser beams and/or another energy beam may be steered over the molten and/or solidified material to control cooling of the molten and/or solidified material.

It will be understood that modifications and alterations may be made to the above-described embodiments without departing from the invention as defined herein.

## Claims

1. A powder bed fusion method comprising forming a plurality of powder layers of a powder bed using a recoater, irradiating a powder layer of the plurality of powder layers with a first energy beam to melt powder when the recoater is moving across the powder bed to form the powder layer; and inputting heat into powder and/or solidified material in front of the recoater using an energy source above the powder bed, as the recoater is moved over the powder bed to form the powder layer, in advance of the powder being melted and/or the solidified material being remelted by the irradiation of the powder layer with the first energy beam.

2. A powder bed fusion method according to claim 1, wherein the input of heat is carried out local to an area to be melted in the powder layer formed by the movement of the recoater.

3. A powder bed fusion method according to claim 1 or claim 2, wherein the energy source is the first or a second energy beam directed over the powder and/or the solidified material in front of the recoater to input heat into the powder and/or the solidified material.

4. A powder bed fusion method according to claim 3, comprising steering the first or the second energy beam to input heat to selected regions of powder and/or solidified material in front of the recoater.

5. A powder bed fusion method according to claim 3 or claim 4, comprising forming molten material by melting powder with the first or the second energy beam; allowing the molten material to solidify to form the solidified material; and inputting heat into the solidified material by irradiating the solidified material with the second energy beam when in front of the recoater when forming the powder layer without melting the solidified material.

6. A powder bed fusion method according to any one of claims 3 to 5, comprising inputting heat into the powder and/or the solidified material in front of the recoater using the second energy beam, as the recoater is moved over the powder bed to form the powder layer, in advance of the powder being melted and/or the solidified material being remelted by the irradiation of the powder layer with the first energy beam.

7. A powder bed fusion method according to any one of claims 3 to 6 comprising, as the recoater is moved over the powder bed to form the powder layer, inputting heat into the powder and/or the solidified material in front of the recoater using the second energy beam and, at the same time, melting powder of the powder layer with the first energy beam.

8. A powder bed fusion method according to any one of claims 3 to 6, wherein the first and/or the second energy beam is used for the inputting of heat into the powder and/or the solidified material in front of the recoater and for melting the powder and/or remelting the solidified material by irradiating the powder layer formed behind the recoater.

9. A powder bed fusion method according to claim 8, comprising changing a focus of the first and/or the second energy beam between the inputting of heat into the powder and/or the solidified material in front of the recoater and the melting of the powder and/or remelting of the solidified material by irradiating the powder layer formed behind the recoater.

10. A powder bed fusion method according to any one of the preceding claims, wherein the first energy beam is a first laser beam and the energy source is a second laser beam.

11. A powder bed fusion method according to any one of claims 1 to 9, wherein the energy source is a heater mounted on the recoater.

12. A powder bed fusion method according to any one of the preceding claims, wherein the input of heat into the powder raises or maintains a temperature of the powder and/or the solidified material below a melting temperature.

13. A powder bed fusion apparatus comprising a controller, the controller arranged to control the powder bed fusion apparatus to carry out the method of any one of claims 1 to 12.

14. A method of generating instructions for powder bed fusion comprising determining a first energy beam scanning sequence for a first energy beam to melt powder when a recoater is moving across the powder bed to form a powder layer; determining a second energy beam scanning sequence for a second energy beam to input heat into powder and/or solidified material in front of the recoater, as the recoater is moved over the powder bed to form the powder layer, in advance of the powder being melted and/or the solidified material being remelted by the irradiation of the powder layer with the first energy beam; and generating instructions for a powder bed fusion apparatus to carry out the first energy beam scanning sequence and the second energy beam scanning sequence.

15. A data carrier having instructions stored thereon, which, when executed by a processor cause the processor to carry out the method of claim 14.
